(19) Europäisches Patentamt
European Patent Office
Office européen des brevets

(11) **EP 3 339 893 A1**

(12) **EUROPEAN PATENT APPLICATION**

(43) Date of publication:
**27.06.2018 Bulletin 2018/26**

(51) Int Cl.:
***G01S 13/34*** (2006.01)  ***G01S 13/42*** (2006.01)

(21) Application number: **17181035.1**

(22) Date of filing: **12.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.12.2016 IN 201641043893**
**22.12.2016 IN 201641043847**
**22.12.2016 IN 201641043881**

(71) Applicant: **Airbus Defence and Space GmbH**
**82024 Taufkirchen (DE)**

(72) Inventors:
• **SANTRA, Avik**
**712258 Hooghly, West Bengal (IN)**
• **GANIS, Alexander Rudolf**
**80469 Munich (DE)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **MULTIPLE INPUT MULTIPLE OUTPUT, MIMO, RADAR SYSTEM**

(57)    A multiple input multiple output, MIMO, radar system comprising a MIMO radar antenna array having transmit antennas adapted to transmit signals and receive antennas adapted to receive signals. The multiple input multiple output, MIMO, radar system comprises a radar apparatus for adaptive transmission of frequency subcarriers through transmit antennas, wherein orthogonality among transmit antennas of the radar antenna array is provided.

Fig. 1

EP 3 339 893 A1

**Description**

The invention relates to a multiple input multiple output, MIMO, radar system providing adaptive transmission of frequency subcarriers and providing orthogonality among transmit antennas of the multiple input multiple output, MIMO, radar system.

Radar (Radio Detection and Ranging) is an object detection system that employs radio waves to determine a range, angle, or velocity of objects or targets. Radar systems can be used in a wide range of applications and can be used to detect any kind of objects or targets including aircrafts, ships, spacecrafts, guided missiles, motor vehicles, weather formations and terrain. A radar apparatus comprises a transmitter generating electromagnetic waves in a radio or microwave frequency domain and transmitting antennas to transmit the generated electromagnetic waves. The radar apparatus further comprises receiving antennas to capture any return signals reflected by objects in the path of the emitted signals supplied to a receiver which is adapted to process the received signals captured by the receiving antenna.

Multiple input multiple output, MIMO, systems comprise multiple transmit and receive antennas and are widely used in wireless communications to provide spatial diversity. The MIMO concept has also been introduced to radar applications. Unlike conventional monostatic radar or phased array radar systems MIMO radar systems employ multiple transmitters, multiple receivers and multiple orthogonal signals which provide more degrees of freedom for the design of radar systems as well as advantages for signal processing. In MIMO radar systems, each transmit antenna can radiate an arbitrary waveform independently of the other transmitting antennas of the antenna array. Each receiving antenna can receive the transmitted and reflected signals. Due to the different waveforms echo signals reflected by a target or object can be assigned to a transmitter.

In a MIMO radar system orthogonal non-overlapping signals are transmitted from different transmit antennas to leverage spatial diversity that MIMO radar systems offer. The orthogonality between various transmit waveforms can be achieved through time division multiplexing, through orthogonal waveforms or through frequency division multiplexing. MIMO radar systems utilize the spatial diversity offered by the multiple transmit and receive antennas. The operating carrier frequency, multi-path reflection and antenna separation in the MIMO configuration ensures that the received signals at the multiple receive antennas are uncorrelated from one another to ensure full spatial diversity.

In MIMO Radar systems, one of the methods for achieving orthogonality among transmit antennas with a frequency division multiplexing method is by transmitting a subset of distinct non-overlapping frequencies through different antennas. In such MIMO radar systems, distinct subsets of frequency subcarriers are allocated statically to transmit antennas of the antenna array. The static allocation of subcarriers to transmit antennas causes a relative low received signal to noise ratio, SNR, of the received radar signals. This makes it inefficient or non-optimal to detect targets and objects by the radar system.

Accordingly, it is an object of the present invention to provide an improved multiple input multiple output, MIMO, radar system for detecting targets in the surrounding of the system.

This object is achieved according to a first aspect of the present invention by a method for adaptive transmission of frequency subcarriers through transmit antennas of a multiple input multiple output, MIMO, radar system, the method comprising the steps of:

transmitting in a probing phase all frequency subcarriers from all transmit antennas of said MIMO radar system in a time division multiplexing mode; and allocating dynamically in an adaption phase frequency subcarriers to transmit antennas of said MIMO radar system by optimizing a received signal strength.

The method for adaptive transmission of frequency subcarriers improves a received signal to noise ratio, SNR, of the MIMO radar system through optimal allocation of frequency subcarriers to transmit antennas of the MIMO radar antenna array of the system. With the method according to the first aspect of the present invention, a signal is transmitted using a subset of frequency subcarriers from any transmit antenna of the MIMO radar antenna array where instead of a static allocation of frequency subcarrier subsets the frequency subcarrier subsets are dynamically allocated. With the method for adaptive transmission according to the first aspect of the present invention, the MIMO radar system adaptively transmits signals over frequency subcarriers and transmit antenna pairs based on maximizing the received signal strength.

In a possible embodiment of the adaptive transmission method according to the first aspect of the present invention, the frequency subcarriers are allocated to transmit antennas dynamically in the adaption phase by locally optimizing the received signal strength over the frequency subcarriers for each transmit antenna.

In an alternative embodiment of the adaptive transmission method according to the first aspect of the present invention, the frequency subcarriers are allocated to transmit antennas dynamically in the adaption phase by globally optimizing the total received signal strength over the frequency subcarriers for all transmit antennas.

In a still further possible embodiment of the adaptive transmission method according to the first aspect of the present invention, the received signal strength is computed over each frequency subcarrier for all transmit antennas of the multiple input multiple output, MIMO, antenna array.

In a still further possible embodiment of the adaptive transmission method according to the first aspect of the present invention, the probing phase and the adaption phase are alternating and repeated periodically in a periodic sequence.

In a still further possible embodiment of the adaptive transmission method according to the first aspect of the present invention, the probing phase comprises a frame to transmit all frequency subcarriers in one or more symbols from all transmit antennas of said MIMO radar system in a time division multiplexing mode by switching between the transmit antennas in a round robin scheme.

In a still further possible embodiment of the adaptive transmission method according to the first aspect of the present invention, the adaption phase comprises at least one frame where the transmit antennas transmit simultaneously the frequency subcarriers allocated to the transmit antennas.

In a still further possible embodiment of the adaptive transmission method according to the first aspect of the present invention, the frequency subcarriers are allocated in the adaption phase to transmit antennas of said MIMO radar system to provide a subcarrier-antenna mapping.

In a still further possible embodiment of the adaptive transmission method according to the first aspect of the present invention, at least a minimum number of frequency subcarriers is allocated to each transmit antenna of said MIMO radar system.

In a still further possible embodiment of the adaptive transmission method according to the first aspect of the present invention, individual frequency subcarriers are allocated in the adaption phase to transmit antennas of said MIMO radar system by optimizing a received signal strength.

In a further possible embodiment of the adaptive transmission method according to the first aspect of the present invention, a frequency subcarrier block of contiguous frequency subcarriers is allocated in the adaption phase to transmit antennas of said MIMO radar system by optimizing a mean received signal strength over the contiguous frequency subcarriers of said frequency subcarrier block.

In a still further possible embodiment of the adaptive transmission method according to the first aspect of the present invention, if the received signal strength provided by a frequency subcarrier allocated to a transmit antenna of said MIMO radar system drops significantly from the time where the respective frequency subcarrier has been allocated to said transmit antenna the respective frequency subcarrier is dynamically reallocated.

The invention further provides according to a second aspect a multiple input multiple output, MIMO, radar system comprising
a MIMO radar antenna array having transmit antennas adapted to transmit signals and receive antennas adapted to receive signals,
wherein in a probing phase all frequency subcarriers are transmitted from all transmit antennas of said MIMO radar antenna array in a time division multiplexing mode and wherein in an adaption phase frequency subcarriers are allocated dynamically to transmit antennas of said MIMO radar antenna array by optimizing a received signal strength of signals received by the receive antennas of said MIMO radar antenna array.

In a possible embodiment of the multiple input multiple output, MIMO, radar system according to the second aspect of the present invention, the frequency subcarriers are allocated to transmit antennas dynamically in the adaption phase by locally optimizing the received signal strength over the frequency subcarriers for each transmit antenna or wherein the frequency subcarriers are allocated to transmit antennas dynamically in the adaption phase by globally optimizing the total received signal strength over the frequency subcarriers for all transmit antennas.

In a further possible embodiment of the multiple input multiple output, MIMO, radar system according to the second aspect of the present invention, the probing phase comprises a frame to transmit all frequency subcarriers in one or more symbols from all transmit antennas of said MIMO radar antenna array in a time division multiplexing mode by switching between the transmit antennas in a round robin scheme and wherein the adaption phase further comprises at least one frame where the transmit antennas transmit simultaneously with the frequency subcarriers allocated to the transmit antennas.

The method for adaptive transmission of frequency subcarriers according to the first aspect of the present invention and the multiple input multiple output, MIMO, radar system according to the second aspect of the present invention can be used in a wide range of applications including detection, tracking and imaging targets.

In a multiple input multiple output, MIMO, radar system, orthogonal non-overlapping signals are transmitted from different transmit antennas of the multiple input multiple output, MIMO, radar antenna array.

The invention further provides according to a third aspect a method for providing orthogonality among transmit antennas of the multiple input multiple output, MIMO, radar antenna array of the MIMO radar system.

The invention provides according to the third aspect a method for providing orthogonality among transmit antennas of a multiple input multiple output, MIMO, radar antenna array of a radar system,
wherein the method comprises the following steps:

transmitting transmit signal waveforms using all, N, frequency subcarriers from any transmit antenna of said multiple input multiple output, MIMO, radar antenna array and

performing a linear complex transformation of the transmit signal waveforms across transmit antennas and across subsequent symbols of the transmit signal waveforms to provide separability of the transmit signal waveforms at any receive antenna of said multiple input multiple output, MIMO, radar antenna array through matched filtering and performing a pulse coding operation across blocks of consecutive symbols in order to achieve pulse diversity.

In a possible embodiment of a method for providing orthogonality among transmit antennas according to the third aspect of the present invention pulse coding is applied by means of a phase operation on blocks of two consecutive symbols in order to achieve pulse diversity.

In a possible embodiment of a method for providing orthogonality among transmit antennas according to the third aspect of the present invention a phase coding is used achieved through Zadoff-Chu codes.

In a possible embodiment of the method for providing orthogonality among transmit antennas according to the third aspect of the present invention, the transmit signal waveforms using all, N, frequency subcarriers are transmitted from two collocated transmit antennas of said multiple input multiple output, MIMO, radar antenna array.

In a further possible embodiment of the method for providing orthogonality among transmit antennas according to the third aspect of the present invention, a first transmit signal waveform (X1) is transmitted as a first symbol from a first transmit antenna and a second transmit signal waveform (X2) is transmitted simultaneously as a first symbol from a second transmit antenna of said MIMO radar antenna array.

In a still further possible embodiment of the method for providing orthogonality among transmit antennas according to the third aspect of the present invention, a negative conjugate second transmit signal waveform (-X2*) is transmitted as a second symbol from the first transmit antenna and a conjugate first transmit signal waveform (X1*) is transmitted as a second symbol from the second transmit antenna of said MIMO radar antenna array.

In a possible embodiment of the method for providing orthogonality among transmit antennas according to the third aspect of the present invention, the transmitted symbols comprise OFDM symbols.

The invention further provides according to a fourth aspect a radar apparatus adapted to provide orthogonality among transmit antennas of a multiple input multiple output, MIMO, radar antenna array of said radar apparatus, wherein said radar apparatus comprises

a transmitting unit adapted to transmit signal waveforms using all, N, frequency subcarriers from any transmit antenna of said multiple input multiple output, MIMO, radar antenna array and further adapted to perform a linear complex transformation of the transmit signal waveforms (x) across transmit antennas and across subsequent symbols of the transmit signal waveforms (x) to provide separability of the transmit signal waveforms (x) at any receive antenna of said multiple input multiple output, MIMO, radar antenna array of said radar apparatus through matched filtering.

In a possible embodiment of the radar apparatus according to the fourth aspect of the present invention, the multiple input multiple output, MIMO, radar antenna array of said radar apparatus comprises two collocated transmit antennas adapted to transmit signal waveforms (x) using all, N, frequency subcarriers.

In a further possible embodiment of the radar apparatus according to the fourth aspect of the present invention, a first transmit signal waveform (X1) is transmitted as a first symbol from a first transmit antenna of said MIMO radar antenna array and the second transmit signal waveform (X2) is transmitted simultaneously as a first symbol from a second transmit antenna of said MIMO radar antenna array.

In a still further possible embodiment of the radar apparatus according to the fourth aspect of the present invention, a negative conjugate second transmit signal waveform (-X2*) is transmitted as a second symbol from the first transmit antenna of said MIMO radar antenna array and a conjugate first transmit signal waveform (X1*) is transmitted as a second symbol from the second transmit antenna of said MIMO radar antenna array of said radar apparatus.

In a still further possible embodiment of the radar apparatus according to the fourth aspect of the present invention, the transmitted symbols comprise OFDM symbols.

In a still further possible embodiment of the radar apparatus according to the fourth aspect of the present invention, the radar apparatus further comprises a receiving unit adapted to perform a matched filtering of signals received by the receive antennas of the MIMO radar antenna array to separate the transmit signal waveforms (x) at any of the receive antennas.

In a still further possible embodiment the two transmit antennas are oppositely polarized, i.e. horizontally polarized and vertically polarized.

The method and apparatus for providing orthogonality among the transmit antennas according to the third and fourth aspect of the present invention use all frequency subcarriers from any transmit antenna and intelligently permute the transmitted signal from other transmit antennas in subsequent pulses to ensure a linear separability of the transmit waveforms at any of the receiver antennas of the MIMO radar antenna array.

The invention further provides according to a fifth aspect an alternative method for providing orthogonality among the transmit antennas of a multiple input multiple output, MIMO, radar system.

The invention provides according to the fifth aspect a method for providing orthogonality among the transmit antennas of a multiple input multiple output, MIMO, radar system comprising the following steps:

transmitting distinct time-coded data signals from multiple, $N_t$, transmit antennas of a multiple input multiple output, MIMO, radar antenna array; and
processing signals received by multiple receive antennas of said multiple input multiple output, MIMO, radar antenna array to separate a target response from all, $N_t$, transmit antennas of said multiple input multiple output, MIMO, radar antenna array.

In a possible embodiment of the method according to the fifth aspect, the multiple, $N_t$, transmit antennas of said multiple input multiple output, MIMO, radar antenna array are collocated.

In an alternative embodiment of the method for providing orthogonality among the transmit antennas according to the fifth aspect of the present invention, the multiple, $N_t$, transmit antennas of said multiple input multiple output, MIMO, radar antenna array are distributed.

In a still further possible embodiment of the method for providing orthogonality among the transmit antennas according to the fifth aspect of the present invention, the processing of the signals received by the multiple receive antennas of said multiple input multiple output, MIMO, radar antenna array comprises fast Fourier transformation, FFT, processing or discrete Fourier transformation, DFT, processing.

In a still further possible embodiment of the method for providing orthogonality among the transmit antennas according to the fifth aspect of the present invention, each time-coded data signal transmitted from the multiple, $N_t$, transmit antennas of said multiple input multiple output, MIMO, radar antenna array comprises symbols carried by a predetermined number, N, of frequency subcarriers.

In a still further possible embodiment of the method for providing orthogonality among the transmit antennas according to the fifth aspect of the present invention, the time-coded data symbols transmitted from the multiple, $N_t$, transmit antennas of said multiple input multiple output, MIMO, radar antenna array comprise OFDM symbols.

The invention further provides according to a sixth aspect a radar apparatus adapted to provide orthogonality among transmit antennas of a multiple input multiple output, MIMO, radar antenna array of said radar apparatus, said radar apparatus comprising:

a transmitting unit adapted to transmit distinct time-coded data signals from multiple, $N_t$, transmit antennas of the multiple input multiple output, MIMO, radar antenna array, and
a receiving unit adapted to process signals received by multiple receive antennas of said multiple input multiple output, MIMO, radar antenna array to separate a target response from all, $N_t$, transmit antennas of said multiple input multiple output, MIMO, radar antenna array.

In a possible embodiment of the radar apparatus according to the sixth aspect of the present invention, the multiple, $N_t$, transmit antennas of said multiple input multiple output, MIMO, radar antenna array are collocated or distributed.

In a still further possible embodiment of the radar apparatus according to the sixth aspect of the present invention, the receiving unit of said radar apparatus is adapted to perform a fast Fourier transformation, FFT, processing or a discrete Fourier transformation, DFT, processing of the signals received by the multiple receive antennas of said multiple input multiple output, MIMO, radar antenna array to separate a target response from all, $N_t$, transmit antennas of said multiple input multiple output, MIMO, radar antenna array.

In a possible embodiment of the radar apparatus according to the sixth aspect of the present invention, each time-coded data signal transmitted from the multiple, $N_t$, transmit antennas of said multiple input multiple output, MIMO, radar antenna array comprises symbols carried by a predetermined number, N, of frequency subcarriers.

In a still further possible embodiment of the radar apparatus according to the sixth aspect of the present invention, the time-coded data signals transmitted by the multiple, $N_t$, transmit antennas of said multiple input multiple output, MIMO, radar antenna array comprise OFDM symbols.

The invention further provides a radar network comprising distributed radar apparatuses according to the sixth aspect of the present invention.

In a possible embodiment of the radar network, the distributed radar apparatuses are connected to a central control unit adapted to synchronize the distributed radar apparatuses.

In the following, preferred embodiments of the different aspects of the present invention are described in detail with reference to the enclosed figures.

Fig. 1      shows a block diagram of a multiple input multiple output, MIMO, radar system according to an aspect of the present invention;

Fig. 2          shows a flowchart of a possible exemplary embodiment of a method for adaptive transmission of frequency subcarriers according to the first aspect of the present invention;

Figs. 3, 4     show schematic diagrams for illustrating a probing phase within the method for adaptive transmission of frequency subcarriers according to the first aspect of the present invention;

Figs. 5, 6     show schematic diagrams for illustrating an adaption phase within the adaptive transmission method according to the first aspect of the present invention;

Figs. 7, 8     illustrate different operation modes of a method for adaptive transmission according to the first aspect of the present invention;

Fig. 9          shows a time frequency representation of an OFDM radar system according to a possible embodiment of the present invention;

Fig. 10         shows a block diagram of a possible implementation of a radio system according to the present invention;

Fig. 11         shows a flowchart of a possible exemplary embodiment of a method for providing orthogonality among transmit antennas according to the third aspect of the present invention;

Fig. 12         illustrates a possible transmission scheme as employed by the method for providing orthogonality as illustrated in Fig. 11;

Fig. 13         shows schematically a diagram for illustrating the processing of received signals transmitted according to the transmission scheme in Fig. 12;

Fig. 14         shows a further possible exemplary implementation of a transmission scheme which can be used by a method for providing an orthogonality according to the third aspect of the present invention;

Fig. 15         shows a flowchart of a possible exemplary embodiment of a method for providing orthogonality among transmit antennas according to a fifth aspect of the present invention;

Fig. 16         shows schematically a transmission scheme as employed by the method according to the fifth aspect of the present invention;

Fig. 17         illustrates schematically the processing of receive signals when using the transmission scheme of Fig. 16;

Fig. 18         illustrates schematically an exemplary embodiment of a radar network employing the method according to the fifth aspect of the present invention.

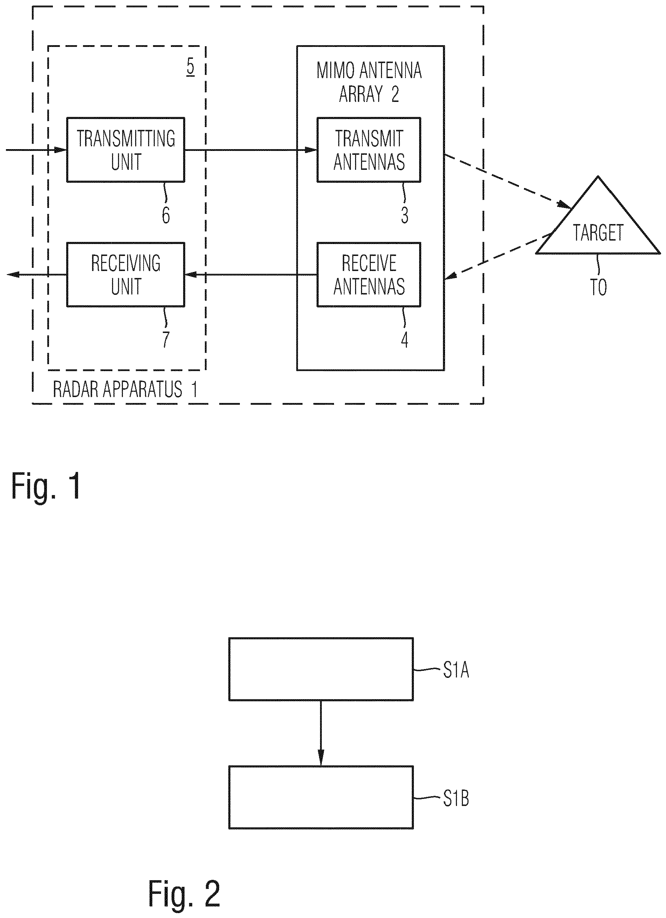

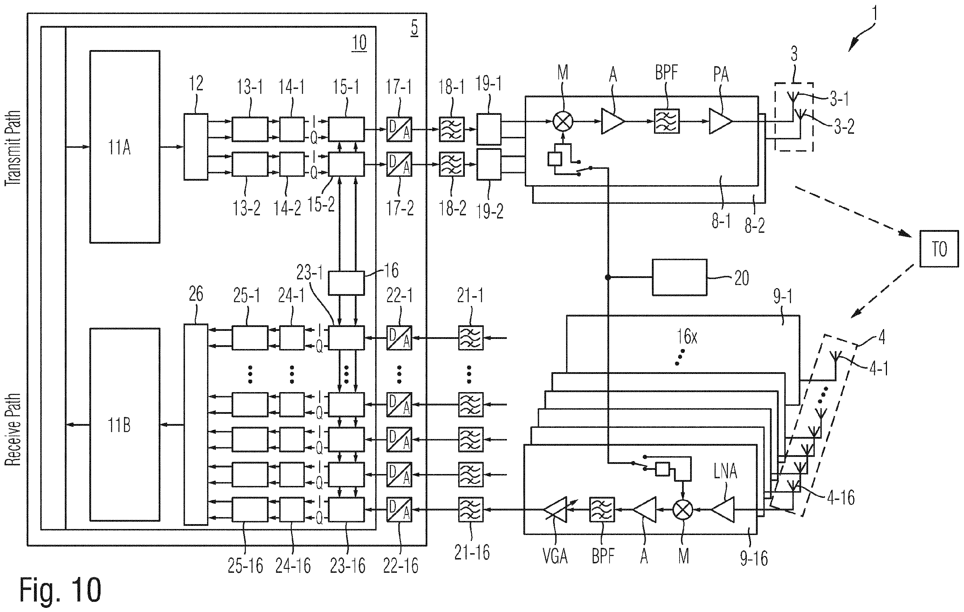

As can be seen in Fig. 1, a multiple input multiple output, MIMO, radar apparatus 1 according to the present invention comprises in the illustrated embodiment at least one MIMO antenna array 2. The MIMO radar antenna array 2 comprises transmit antennas 3 adapted to transmit radar signals and receive antennas 4 adapted to receive reflected or echo signals which can be reflected by a target object TO as illustrated schematically in Fig. 1. The MIMO radar antenna array 2 is connected to a signal processing unit 5 as shown in Fig. 1. The signal processing unit 5 comprises in the illustrated exemplary embodiment a transmitting unit or transmitter 6. The signal processing unit 5 further comprises in the illustrated embodiment a receiving unit or receiver 7. A possible implementation of the radar apparatus 1 as shown in Fig. 1 is illustrated in Fig. 10. The radar apparatus 1 comprises a transmit signal path and a receive signal path. In the transmit signal path, the output signals of the transmitting unit 6 are supplied to the different transmit antennas 3 of the MIMO antenna array 2. In the receive signal path, the output signals received by the receive antennas 4 of the MIMO antenna array 2 are output to the receiving unit 7 for processing. The radar apparatus 1 is configured to perform an adaptive transmission of frequency subcarriers through the transmit antennas 3 of the multiple input multiple output, MIMO, radar antenna array 2.

Fig. 2 shows a flowchart of a possible exemplary embodiment of a method for adaptive transmission of frequency subcarriers according to the first aspect of the present invention which can be performed in a possible embodiment by the radar apparatus 1 illustrated in Fig. 1. In a first step S1A, all frequency subcarriers from all transmit antennas of the transmit antenna array 3 shown in Fig. 1 are transmitted in a probing phase in a time division multiplexing mode. Further, in a step S1B, in an adaption phase, frequency subcarriers are allocated dynamically to transmit antennas of the transmit antenna array 3 by optimizing a received signal strength RSSI.

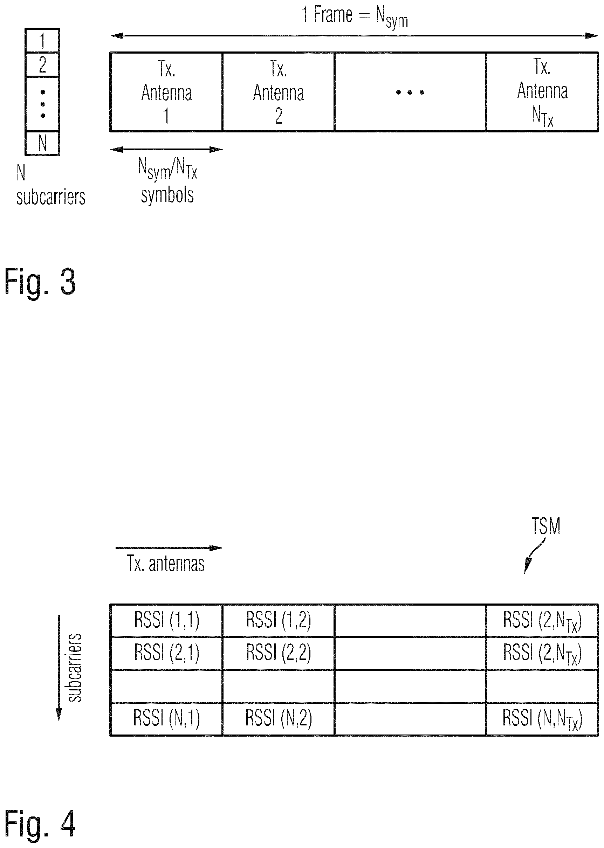

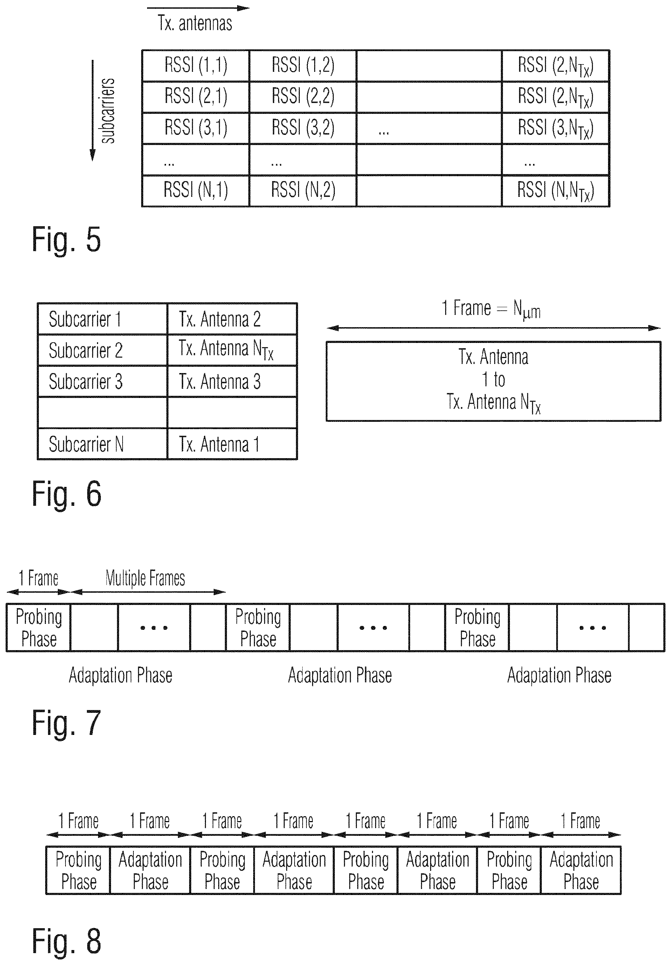

Accordingly, there are two phases, i.e. a probing phase and an adaption phase. The probing phase is illustrated in Figs. 3, 4. The adaption phase is illustrated in Figs. 5, 6.

In a possible embodiment, the frequency subcarriers are allocated adaptively to transmit antennas by either locally optimizing the received signal strength, RSSI, at a frequency subcarrier or by globally optimizing the total received signal strength RSSI from any given transmit antenna. Accordingly, in a possible embodiment of the adaptive transmission method according to the first aspect of the present invention as shown in Fig. 2, the frequency subcarriers are allocated to transmit antennas in step S1B dynamically by locally optimizing the received signal strength RSSI over the frequency subcarriers for each single transmit antenna. In an alternative embodiment of the method for adaptive transmission according to the first aspect of the present invention as illustrated in Fig. 2, the frequency subcarriers are allocated in step S1B to transmit antennas of the transmit antenna array 3 dynamically in the adaption phase by globally optimizing the total received signal strength RSSI over the frequency subcarriers for all transmit antennas of the transmit antenna array 3. The received signal strength RSSI can be computed over each frequency subcarrier for all transmit antennas. In a possible embodiment, the probing phase and the adaption phase are alternating and repeated periodically in a periodic sequence as also illustrated in Figs. 7, 8.

In a possible embodiment, the probing phase comprises a frame to transmit all frequency subcarriers in one or more symbols from all transmit antennas of the transmit antenna array 3 in a time division multiplexing mode by switching between the transmit antennas in a round robin scheme.

The adaption phase comprises in a possible embodiment at least one frame where the transmit antennas transmit simultaneously the frequency subcarriers allocated to the transmit antennas of the transmit antenna array 3. In the adaption phase, frequency subcarriers can be allocated to the transmit antennas to provide a subcarrier-antenna mapping.

In a possible implementation of the adaptive transmission method according to the first aspect of the present invention, at least a minimum number of frequency subcarriers is allocated to each transmit antenna 3-i of the transmit antenna array 3. Further, in a possible embodiment, in the adaption phase, individual frequency subcarriers can be allocated to transmit antennas of the transmit antenna array 3 by optimizing a received signal strength, i.e. by maximizing a received signal strength RSSI.

In a further possible embodiment of the adaptive transmission method according to the first aspect of the present invention, in the adaption phase, a frequency subcarrier block of contiguous, i.e. neighbouring frequency subcarriers is allocated to transmit antennas of the transmit antenna array 3 by optimizing a mean received signal strength RSSI over the contiguous neighbouring subcarriers of the frequency subcarrier block.

In a still further possible embodiment of the adaptive transmission method as illustrated in Fig. 2, if the received signal strength RSSI provided by a frequency subcarrier allocated to a transmit antenna of the MIMO radar system drops significantly from the time where the respective frequency subcarrier has been allocated to this transmit antenna, the respective frequency subcarrier is dynamically reallocated.

Fig. 3 shows a schematic diagram for illustrating a transmission of signals in a probing phase performed in step S1A of the method for adaptive transmission according to the first aspect of the present invention. The adaptive transmission via the antenna array 3 comprises in the illustrated embodiment a probing phase having a frame comprising several symbols NSYM. The transmit antenna array 3 comprises $N_{TX}$ transmit antennas 3-i in the illustrated embodiment. In the probing phase, all frequency subcarriers are transmitted in one or more symbols from all transmit antennas 3-i of the transmit antenna array 3 in a time division multiplexing mode, TDM, by switching between the transmit antennas 3-i of the transmit antenna array 3 in a round robin scheme as illustrated in Fig. 3. For the different frequency subcarriers any kind of signal can be transmitted, for instance a pseudorandom signal or the like.

Fig. 4 illustrates a target strength matrix TSM indicating for each frequency subcarrier and each antenna the received signal strength RSSI. The transmit antenna array 2 can comprise for instance in a possible embodiment two transmit antennas ($N_{TX}$=2) and can use in a possible exemplary implementation N=1024 frequency subcarriers fsc. The matrix illustrated in Fig. 6 comprises in this exemplary embodiment N=1024 multiplied by 2 data entries. The target signal strength matrix, TSM, illustrated in Fig. 4 can change dynamically and is created on the receiving side of the radar apparatus 1 shown in Fig. 1. The radar apparatus 1 comprises a receive antenna array 4 comprising several receive antennas. In a possible embodiment, the receive antenna array 4 comprises 16 receive antennas 4-i. For each receive antenna 4-i, a target strength matrix TSM as illustrated in Fig. 4 can be provided.

In a possible embodiment of the method according to the first aspect of the present invention, the different frequency subcarriers, for instance N=1024 different frequency subcarriers, can be allocated to different transmit antennas, for instance to two different transmit antennas of the transmit antenna array 3, dynamically in the adaption phase by optimizing the received signal strength RSSI over the frequency subcarriers for each transmit antenna 3-i. The data entries for the received signal strength RSSI can be read from the target strength matrix TSM as illustrated in Fig. 4. In the adaption phase, the received signal strength RSSI over the frequency subcarriers for each transmit antenna is optimized, i.e. maximized. The optimization or maximization of the received signal strength RSSI can be performed either locally or globally. For local optimization, the received signal strength RSSI is optimized for the frequency subcarriers for each transmit antenna 3-i separately. Alternatively, for global optimization, the total received signal strength RSSI is maximized over the frequency subcarriers for all transmit antennas of said transmit antenna array 3.

Fig. 5 illustrates schematically a signal processing during the adaption phase of the adaptive transmission method according to the first aspect of the present invention. The number $N_{TX}$ of transmission antennas 3-i can vary and can comprise two or more transmission antennas. Further, the number N of frequency subcarriers fsc can vary in different applications. In a possible implementation, the number of frequency subcarriers fsc is N=1024. In the illustrated example of Fig. 5, the different received signal strengths RSSI are illustrated for each frequency subcarrier and each transmit antenna. For instance, the signal strength RSSI (1, 2) in the first row of the illustrated matrix indicates the received signal strength RSSI for the first frequency subcarrier fsc1 and the second transmission antenna 3-2. In the adaption phase, the transmission antennas of the transmit antenna array 3 are adapted to transmit simultaneously with the allocated frequency subcarriers that provide a maximum received signal strength RSSI in the adaption phase. This can be done by locally optimizing the received signal strength for each single transmit antenna separately. In Fig. 5, the maximum received signal strength RSSI for each frequency subcarrier fsc is printed in bold letters. In an alternative implementation, the subcarrier transmit antenna mapping can be derived by maximizing a global or overall received signal strength using an optimization algorithm.

Accordingly, in the probing phase that comprises typically a first frame, all frequency subcarriers are transmitted in one or more symbols from all transmit antennas in a time division multiplexing mode TDM by switching between the transmit antennas 3-i in a round robin manner. Since the transmit antennas of the transmit antenna array 3 are switched in the time division multiplexing mode and a cyclic prefix CP is chosen so as to avoid intercarrier interference the transmissions from the respective transmit antennas of the transmit antenna array 3 can be separated from each another. In the local optimization implementation, for each n element of N, wherein N is the number of frequency subcarriers fsc in the system available for transmission, the received signal strength values RSSI are computed over each frequency subcarrier n for all $N_{TX}$ transmit antennas as follows:

$$\text{RSSI} = \left\{ \left| h_{TX,i}(n) \right|^2 \right\}_{i=1}^{N_{TX}}. \tag{1}$$

In the adaptive phase, i.e. during the subsequent frames, the frequency subcarriers subset for transmission from a particular transmit antenna 3-i of the transmit antenna array 3 is selected or chosen so as to maximize the received signal strength RSSI over those frequency subcarriers. Accordingly, each transmit antenna is selected for a particular frequency subcarrier which offers a maximum received signal strength RSSI and can be expressed as follows:

$$assign\ subcarrier\ n\ to\ tx\ i = \arg\max_i \left\{ \left| h_{Tx,i}(n) \right|^2 \right\} \tag{2}$$

In a preferred embodiment, the probing phase and the adaptive phase are repeated periodically. The proposed optimization is based on locally optimizing the utilization of transmit antenna-subcarrier resources to maximize the received signal strength RSSI at each frequency subcarrier fsc with minimal computation resources.

In an alternative embodiment of the adaptive transmission method according to the first aspect of the present invention, the optimization is performed globally. Similar to the first implementation of the probing phase, all frequency subcarriers fsc are transmitted through all transmit antennas 3-i in a time division multiplexing mode, TDM. Also, the received signal strength RSSI at each frequency subcarrier from all transmit antennas are similarly computed. A difference in the optimization lies in the way the subcarrier-transmit antenna map is generated. In the alternative implementation, a subcarrier-transmit antenna pair assignment is done by solving an integer linear programming problem for c(n,i) as follows:

$$\max_{c(n,i)} \sum_{n=1}^{N} \sum_{i=1}^{N_{TX}} c(n,i) \left| h_{TX,i}(n) \right|^2$$

$$\text{s.t.} \sum_{i=1}^{N_{TX}} c(n,i) = 1 \ \forall n \ \varepsilon \ N \ \&$$

$$c(n,i) \ \varepsilon \ (0,1) \ \forall \ n \ \varepsilon \ N, \ i \ \varepsilon \ N_{TX} \tag{3}$$

The subcarrier-transmit antenna assignment

$$c(n,i) = \begin{cases} 1 & indicates \ subcarrier \ n \ not \ assigned \ antenna \ i \\ 0 & indicates \ subcarrier \ n \ not \ assigned \ antenna \ i \end{cases} \tag{4}$$

is achieved by solving an integer linear program to maximize the overall received signal strength RSSI of the MIMO radar system in the adaption phase. Solving the above-referenced integer linear problem requires more computation resources than the first alternative optimization implementation, however, computation constraints can be relaxed as $0 \leq c(n,i) \leq 1$ and subsequently the result can be thresholded as: $c(n,i) \geq 0.5$ set $c(n,i)=1$ else 0. Accordingly, the complexity for solving the optimization problem can be drastically reduced by approximating the optimization problem as a linear programming problem which can be solved in polynomial time complexity through fast interior-point method solvers.

In a possible implementation, it can be ensured that at least $N_{min}(\leq N/N_{TX})$ frequency subcarriers are assigned to a transmit antenna of the transmit antenna array 3. Further, instead of individual frequency subcarriers allocated to any transmit index a block of contiguous or neighbouring frequency subcarriers can be allocated to any transmit antenna based on maximizing a mean received signal strength RSSI over the complete contiguous frequency subcarrier block to reduce the required computational complexity. If, for instance, $N_{ch}$ is the number of contiguous frequency subcarriers then a modified adaptive optimization can be done over a $N/N_{ch}$ set instead of N frequency subcarriers.

After a warm-up phase, i.e. at least one probing phase and adaption phase instead of optimizing over all the frequency subcarriers it is possible to only re-optimize a subcarrier-transmit-antenna pair for few frequency subcarriers, whose

$$\frac{Present \ RSSI\left(n, i_{assigned}\right)}{RSSI_{max}(n)} < \mu, \tag{5}$$

wherein $RSSI_{max}(n)$ is the maximum received signal strength RSSI at frequency subcarrier n that leads to an assignment of frequency subcarrier n to $i_{assigned}$. Present $RSSI(n,i_{assigned})$ is the same received signal strength RSSI on the probing phase of the present cycle. Accordingly, such frequency subcarriers are re-optimized whose received signal strength RSSI has drastically or significantly dropped from the time it was allocated to the antenna.

Fig. 6 further shows schematically the adaption phase in a MIMO radar system employing the adaptive transmission method according to the first aspect of the present invention. The switching between the antennas is performed in the frequency domain between frequency subcarriers.

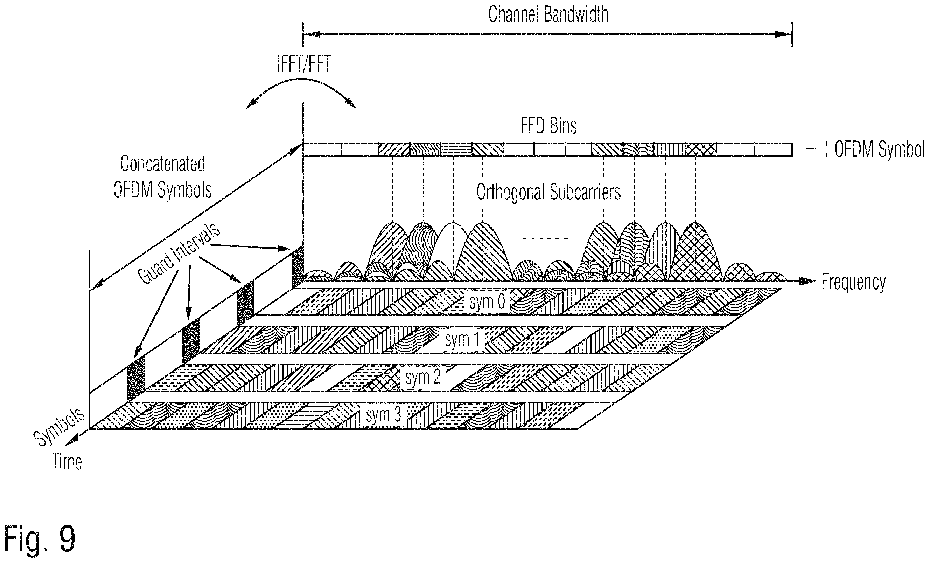

Fig. 7 shows schematically a first operation mode of the radar system where a probing phase comprises a single frame whereas the adaption phase comprises multiple frames. In contrast, Fig. 8 illustrates an operation mode where both the probing phase and the adaption phase each comprise a single frame. Accordingly, in the operation mode illustrated in Fig. 8, the adaption is performed more often. The operation mode illustrated in Fig. 7 is more suitable in situations where the received signal strength RSSI does not change rapidly, for instance for a stationary or slow target such as a pedestrian. The other operation mode illustrated in Fig. 8 is more suitable for situations where the received signal strength RSSI changes more drastically, for instance for a fast-moving target or object such as a car or aeroplane. In a possible embodiment, the radar apparatus 1 according to the present invention can switch between different operation modes including the operation mode 1 illustrated in Fig. 7 and the second operation mode illustrated in Fig. 8. Fig. 9 illustrates schematically a time frequency representation of a OFDM signal over N frequency subcarriers and K symbols as employed in a possible embodiment of the radar apparatus 1 according to the present invention. In a possible embodiment, the symbols in the probing phase and the adaption phase comprise OFDM symbols as shown in Fig. 9.

The information secured by the MIMO radar system includes the position, velocity and aspect angle of a target object TO relative to the radar unit. The OFDM signal is composed of modulation symbols and can be applied for radar applications. An OFDM symbol can comprise an IFFT OFDM waveform and a guard interval as illustrated in Fig. 9. IFFT creates OFDM waveforms from OFDM subcarriers. A modulated frequency subcarrier comprises one point in frequency and time. An OFDM burst can comprise one or more OFDM symbols as shown in Fig. 9.

Fig. 10 shows a possible hardware implementation of a radar apparatus 1 as shown in Fig. 1. In the illustrated embodiment, the transmit antenna array 3 of the radar apparatus comprises two transmit antennas 3-1, 3-2. The receive antenna array 4 comprises in the illustrated embodiment for instance sixteen receive antennas 4-1 to 4-16. The radar apparatus 1 comprises a transmit signal path and a receive signal path. In the illustrated embodiment, each antenna 3-i of the transmit antenna array is connected to a corresponding RF up-conversion unit 8-i. In a similar manner, each of the sixteen receive antennas 4-i of the receive antenna array 4 is connected to an associated RF down-conversion unit 9-i. In the illustrated embodiment, the signal processing unit 5 comprises a FPGA 10 (Field Programmable Gate Array). The Field Programmable Gate Array 10 comprises in the illustrated implementation several subunits including a radar transmission signal generator 11A and a radar receive signal processing unit 11B. The radar transmit signal generation unit 11A can provide selected predetermined signals such as a chirp signal or a pseudorandom signal. This signal is supplied to a subcarrier mapping unit 12. The transmit signal path shown in Fig. 10 comprises further two separate IFFT units 13-1, 13-2, two cyclic prefix units 14-1, 14-2 and two parallel vector modulators 15-1, 15-2 connected both to a numerically controlled oscillator NCO 16. Further, the transmit signal path comprises two digital analog converters 17-1, 17-2 followed by band-pass filters 18-1, 18-2. Further, the transmit signal path comprises in the illustrated implementation, two SPDT switches 19-1, 19-2 to select a transmit antenna 3-1, 3-2 within the transmit antenna array 3. The first SPDT switch 19-1 supplies the signal to the first RF up-conversion unit 8-1 and the other SPDT switch 19-2 supplies the signal to the other RF up-conversion unit 8-2 for the second transmit antenna 3-2. The up-conversion units 8-i comprise a mixer M followed by an amplifier A, a further band-pass filter BPF and a power amplifier PA as illustrated in Fig. 10. The mixer M can be switched to a phase-locked loop, PLL, frequency synthesizer 20 of the radar apparatus 1. This PLL frequency synthesizer 20 can for instance provide a signal in a frequency range between 4 and 13.6 GHz.The radar apparatus 1 comprises in the illustrated embodiment two transmit antennas 3-1, 3-2 for transmission signals for instance with a 50 MHz bandwidth.

The radar apparatus 1 further comprises in the illustrated embodiment of Fig. 10 sixteen receive antennas 4-i adapted to receive signals for instance with a 50 MHz bandwidth. Each receive antenna 4-i is connected to an associated RF down-conversion unit 9-i as shown in Fig. 10. The RF down-conversion unit comprises an LNA multiplier, a mixer M, an amplifier A followed by a band-pass filter BPF and an adaptive VGA as shown in Fig. 10. The multiplier M of the RF down-conversion unit can be switched to the phase-locked loop, PLL, frequency synthesizer 20 of the radar apparatus 1. Each of the RF down-conversion units 9-i is followed within the receive signal path of the radar apparatus 1 by an associated band-pass filter 21-i and a digital analog converter 22-i. Accordingly, the receive signal path of the radar apparatus 1 illustrated in Fig. 10 comprises in the illustrated embodiment sixteen channels. For each channel, a vector demodulator 23-i is provided connected to the numerically controlled oscillator 16. The IQ output signals of the vector demodulators 23-i are supplied to an inverse cyclic prefix unit 24-i followed by an FFT unit 25-i as shown in Fig. 10. The output signals of all sixteen FFT units 25-i are supplied to a subcarrier demapping unit 26 of the receive signal path. The subcarrier demapping unit 26 provides an output signal which is supplied to the radar receive signal processing unit 11B of the FPGA 10.

The transmit signal path and the receive signal path both comprise a digital portion and an analog RF frontend portion. The antennas of the transmit antenna array 3 and the receive antenna array 4 are connected to the analog RF front portion of the radar apparatus 1. The radar signals transmitted by the transmit antennas 3-i of the transmit antenna array 3 can be reflected by a target object TO wherein the reflected signals are received by the receive antenna array 4-i of the receive antennas 4 of the radar apparatus 1. The MIMO radar apparatus 1 as illustrated in Fig. 10 can provide a position, velocity and aspect angle of a target object TO relative to the radar apparatus 1. The radar apparatus 1 as shown in Figs. 1, 10 can be used for a wide range of applications. For instance, commercial airliners can be equipped with radar devices or radar apparatuses 1 to warn a pilot of obstacles in the path of the aeroplane or approaching the aeroplane. Further, the radar apparatus 1 facilitates the landing of an aeroplane in bad weather conditions at airports equipped with radar-assisted ground-controlled approach systems. The radar-assisted ground-controlled approach system monitors the plane's flight which can be observed on radar screens while operators give radio landing directions to the pilot of the plane. Further, a multiple input multiple output radar apparatus 1 can facilitate the creation of a radar network which can be used for tracking, surveillance and defence operations. A MIMO radar apparatus 1 as illustrated in the embodiments of Figs. 1, 10 can also be used in automotive applications where permissible power transmission is limited. Further, the MIMO radar apparatus 1 as illustrated in Figs. 1, 10 can also be used for providing situational awareness in flying platforms such as UAVs and helicopters. The radar apparatus 1 as shown in Figs. 1, 10 uses an adaptive transmission method for adaptive transmission of frequency subcarriers to increase the signal to noise ratio SNR of the received signals reflected from a target object TO. The received signal to noise ratio, SNR, is improved through optimal subcarrier transmission antenna pair assignment, i.e. by dynamically allocating in an adaption phase frequency subcarriers to the transmit antennas 3-i of the MIMO radar apparatus 1 by optimizing the received signal strength RSSI globally or locally.

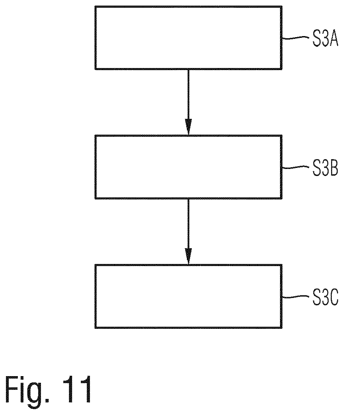

Fig. 11 shows a flowchart of a possible exemplary embodiment of a method for providing orthogonality among transmit antennas of a multiple input multiple output, MIMO, radar antenna array of a radar system. The method illustrated in Fig. 11 can be used for a radar apparatus 1 as illustrated in Fig. 1 or in Fig. 10. For radar systems, it is important to provide orthogonality among transmit signals or transmit waveforms X to ensure that they can be separated again.

With the method for providing orthogonality among transmit antennas such as transmit antennas 3-i of the transmit antenna array 3 illustrated in Figs. 1, 10, there can be provided two main steps.

In a first step S3A, transmit signal waveforms x are transmitted using all, N, frequency subcarriers from any transmit antenna 3-i of the multiple input multiple output, MIMO, radar antenna array. In a further step S3B, a linear complex transformation of the transmit signal waveforms is performed across transmit antennas 3-i and across subsequent symbols of the transmit signal waveforms X to provide separability of the transmit signal waveforms at any receive antenna 4-i of the multiple input multiple output, MIMO, radar antenna array 2 through matched filtering.

In a further step S3C a pulse coding operation across blocks of consecutive symbols 1S is performed in order to achieve pulse diversity.

The transmit signal waveforms using all, N, frequency subcarriers can be transmitted in a possible embodiment from two collocated transmit antennas 3-1, 3-2 of the transmit antenna array 3 of the radar apparatus 1 as illustrated in the embodiments of Figs. 1, 10.

In a possible implementation of the method for providing orthogonality among transmit antennas according to the third aspect of the present invention, a first transmit signal waveform (X1) is transmitted as a first symbol from a first transmit antenna 3-1 and a second transmit signal waveform (X2) is transmitted simultaneously as a first symbol from a second transmit antenna 3-2 of the multiple input multiple output, MIMO, radar antenna array. Further, in a possible implementation, a negative conjugate second transmit signal waveform (-X2*) is transmitted at a second symbol from the first transmit antenna 3-1 and a conjugate first transmit signal waveform (X1*) is transmitted as a second symbol from the second transmit antenna 3-2 of said multiple input multiple output, MIMO, radar antenna array. The transmitted symbols can comprise OFDM symbols.

The method for providing orthogonality among transmit antennas according to the third aspect of the present invention operates with two transmit antennas 3-1, 3-2 of a transmit antenna array 3. The waveforms X are transmitted over two symbols in a frame from the two transmission antennas 3-1, 3-2 as follows:

$$\begin{bmatrix} \underline{y_1} \\ \underline{y_2} \end{bmatrix} = \begin{bmatrix} I(x_1) & I(x_2) \\ I(-x_2^*) & I(x_1^*) \end{bmatrix} \begin{bmatrix} \underline{h_1} \\ \underline{h_2} \end{bmatrix} + \begin{bmatrix} \underline{z_1} \\ \underline{z_2} \end{bmatrix} \tag{6}$$

wherein $\underline{h_1}$ and $\underline{h_2}$ are the responses of the target object TO on the N frequency subcarriers fc transmitted from the first and second transmit antenna 3-1, 3-2 and received by the receive antennas 4-i. The number of receive antennas 4-i used in the method for providing orthogonality among transmit antennas according to the third aspect of the present invention can vary. In a possible implementation, sixteen receive antennas 4-1 to 4-16 are used. $x_1$, $x_2$ in equation (6) represent the transmitted signals on the N frequency subcarriers fc $\underline{y_1}$, $\underline{y_2}$ represent the received signals on the N frequency subcarriers at symbol 1 and symbol 2 and $\underline{z_1}$, $\underline{z_2}$ represent noise.

At any of the receive antennas 4-i, a target response of the N frequency subcarriers as seen from the first transmission antenna 3-1 at the receiver is processed and linearly separated as follows:

$$[I(x_1^*) \quad I(-x_2)] \begin{bmatrix} \underline{y_1} \\ \underline{y_2} \end{bmatrix} = [I(|x_1|^2 + |x_2|^2) \quad I(x_1^* x_2 - x_1^* x_2)] \begin{bmatrix} \underline{h_1} \\ \underline{h_2} \end{bmatrix} = \alpha \underline{h_1} \tag{7}$$

wherein $\alpha$ is a constant scalar value given as $|x_1|^2 + |x_2|^2$
and cannot affect the subsequent radar processing for range, Doppler and aspect angle estimation.

Similarly, at any of the sixteen receive antennas 4-i, a target response of the N frequency subcarriers as seen from the second transmission antenna 3-2 at the receiver is processed and linearly separated as follows:

$$[I(x_2^*) \quad I(x_1)]\begin{bmatrix} \underline{y_1} \\ \underline{y_2} \end{bmatrix} = [I(-x_1 \, x_2^* + x_1 \, x_2^*) \quad I(|x_1|^2 + |x_2|^2)]\begin{bmatrix} \underline{h_1} \\ \underline{h_2} \end{bmatrix} = \alpha \, \underline{h_2}$$

(8)

The transmit signal waveforms $x_1$, $x_2$ can comprise different kinds of signals such as pseudorandom signals. The two signal waveforms $x_1$, $x_2$ have to be different to achieve orthogonality using the method for providing orthogonality according to the third aspect of the present invention as also illustrated in the flowchart of Fig. 11. The method does leverage the spatial diversity of the MIMO radar system and also fast-time diversity. Accordingly, it can make the system more robust against adverse phenomena such as speckle, occlusion of targets or multi-path effects.

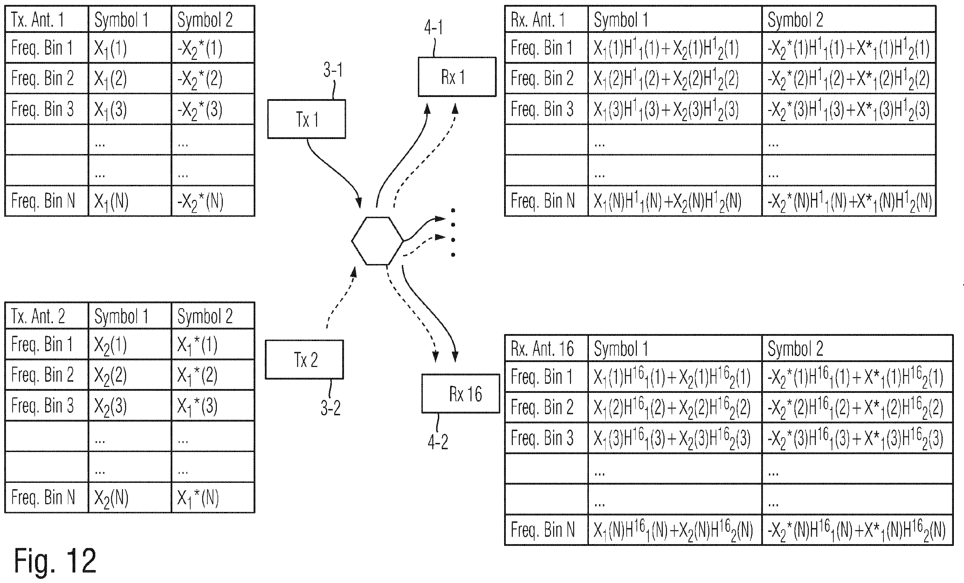

Fig. 12 illustrates a proposed transmission scheme across time, frequency and transmission antennas 3-i in a MIMO radar system according to the present invention to illustrate the operation of a method for providing orthogonality among transmit antennas according to the third aspect of the present invention. Fig. 12 illustrates the two transmit antennas 3-1, 3-2 of the transmit antenna array 3. The transmit antennas 3-1, 3-2 are collocated in a preferred embodiment and transmit radar signals to a target object TO reflecting the radar signals to receive antennas 4-1 to 4-16 of the receive antenna array 4.

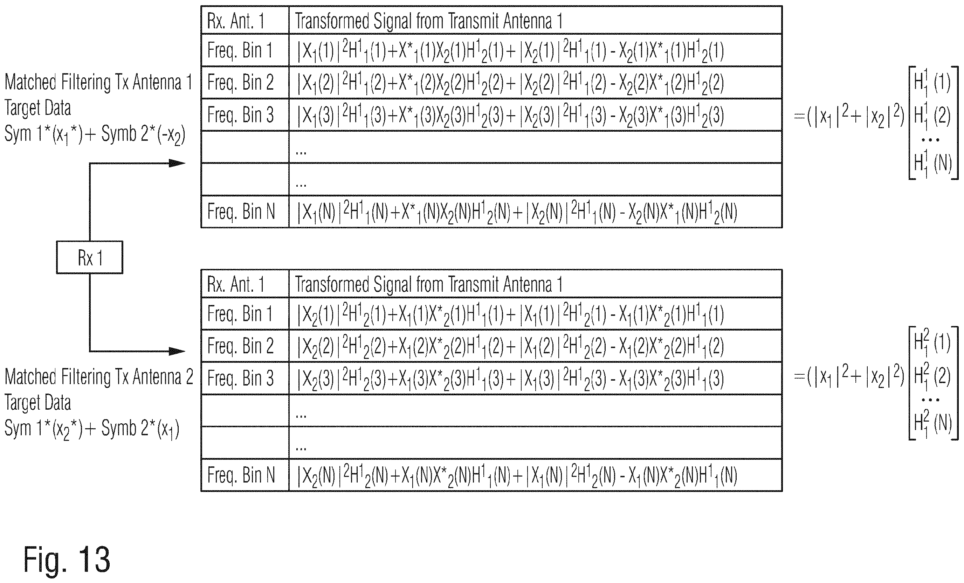

Fig. 13 illustrates the reception of target data across time, frequency and transmit antennas for the first receive antenna 4-1 for illustrating the operation of a method for providing orthogonality among transmit antennas 3-i according to the third aspect of the present invention. The linear transformation illustrated in Fig. 13 can be applied in the same manner at the other receive antennas 4-2 to 4-16 as well. The receiving unit 7 of the radar apparatus 1 is adapted to perform a matched filtering of signals received by the receive antennas 4-i of the MIMO radar antenna array 2 to separate the transmit signal waveform at any receive antenna 4-i as illustrated in Fig. 13.

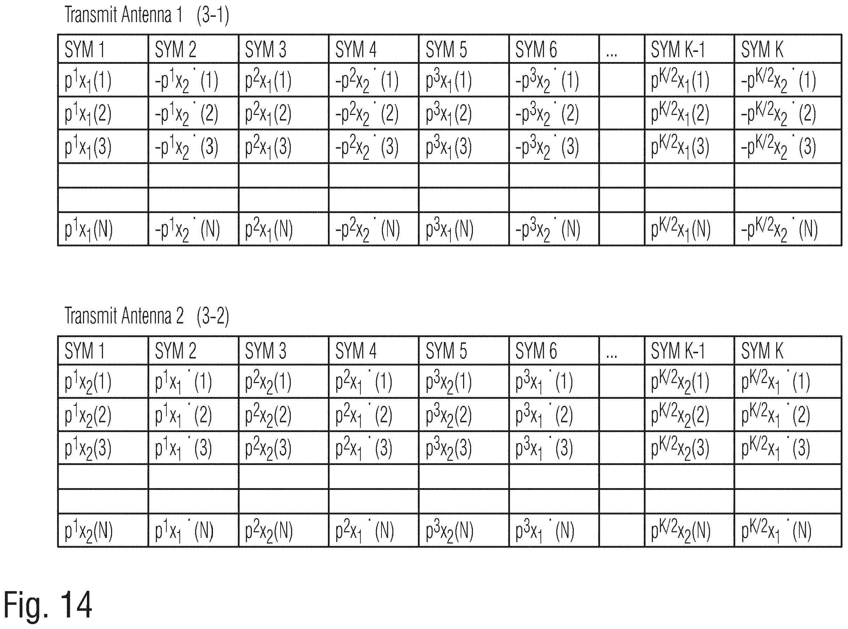

Fig. 14 illustrates a further exemplary transmission scheme for the two transmit antennas 3-1, 3-2 when using more than two symbols.

The context value of the illustrated sequence at the end position parameterized by u is given as:

$$p^n = \exp\left(-j\frac{\pi \, un \, (u+1)}{K/2}\right), \, 0 < u < \frac{K}{2}$$

The sequence code across the symbol's pulses provides pulse diversity to the MIMO radar system.

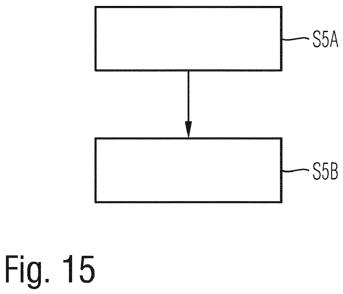

Fig. 15 shows a flowchart of a possible exemplary embodiment of a further alternative method for providing orthogonality among the transmit antennas 3-i of a multiple input multiple output, MIMO, radar system according to a fifth aspect of the present invention. The illustrated method for providing orthogonality according to the fifth aspect of the present invention comprises two main steps.

In a first step S5A, distinct time-coded data signals are transmitted from multiple, $N_t$, transmit antennas 3-i of a multiple input multiple output, MIMO, radar antenna array. In a further step S5B of the method for providing orthogonality according to the fifth aspect of the present invention, signals received by multiple receive antennas 4-i of the multiple input multiple output, MIMO, radar antenna array are processed to separate a target response for all, $N_t$, transmit antennas 3-i of the multiple input multiple output, MIMO, radar antenna array. The method for providing orthogonality among the transmit antennas can employ more than two transmit antennas. With the method according to the fifth aspect of the present invention, the coding is done only across time and can be used for both closely separated antennas and widely separated antennas. Further, the method according to the fifth aspect of the present invention scales with multiple transmit antennas 3-i. The method for providing orthogonality according to the fifth aspect of the present invention can also be used for radar networks where individual radar apparatuses A in the radar network operate independently but where time and frequency is synchronized with other radar apparatuses within the radar network by a central control unit of the radar network.

Accordingly, in a possible embodiment of the method for providing orthogonality among transmit antennas according to the fifth aspect of the present invention, multiple transmit antennas 3-i of the multiple input multiple output MIMO radar antenna array can be collocated, i.e. located close to each other.

In an alternative embodiment of the method for providing orthogonality according to the fifth aspect of the present invention, the multiple transmit antennas 3-i of the multiple input multiple output, MIMO, radar antenna array can also be distributed and form part of a distributed radar network.

In a possible embodiment, the processing of the signals received by the multiple receive antennas 4-i of the multiple input multiple output, MIMO, radar antenna array 2 comprises a fast Fourier transformation processing FFT or a discrete Fourier transformation DFT processing. Each time-coded data signal transmitted from the multiple $N_t$ transmit antennas of said multiple input multiple output, MIMO, radar antenna array 2 can comprise symbols carried by a predetermined number N of frequency subcarriers fc. For instance, N=1024 frequency subcarriers fc can be employed. In a possible implementation, the time-coded data symbols transmitted from the multiple $N_t$ transmit antennas of the multiple input multiple output, MIMO, radar antenna array 2 used in the method according to the fifth aspect of the present invention can also comprise OFDM symbols.

The method for providing orthogonality among transmit antennas can comprise two or more transmit antennas 3-i. For two transmit antennas 3-1, 3-2 the following signals can be transmitted across two time indices k, k+1 as follows:

$$\begin{bmatrix} y(k) \\ y(k+1) \end{bmatrix} = \begin{bmatrix} x_1 & x_2 \\ x_1 & -x_2 \end{bmatrix} \begin{bmatrix} h_1 \\ h_2 \end{bmatrix} \qquad (9)$$

wherein $(x_1,x_1)$ and $(x_2,-x_2)$ are data transmitted from transmit antennas 3-1, 3-2, respectively, on time index k and time index k+1.

At the receiver a signal processing can be performed.

The target response from the first transmit antenna 3-1 is calculated as follows:

$$\begin{bmatrix} x_1^* & x_1^* \end{bmatrix} \begin{bmatrix} y(k) \\ y(k+1) \end{bmatrix} = \begin{bmatrix} x_1^* & x_1^* \end{bmatrix} \begin{bmatrix} x_1 & x_2 \\ x_1 & -x_2 \end{bmatrix} = \begin{bmatrix} 2|x_1|^2 & x_1^* x_2 - x_1^* x_2 \end{bmatrix} \begin{bmatrix} h_1 \\ h_2 \end{bmatrix} = 2|x_1|^2 \, h_1 \qquad (10)$$

The target response from the second transmit antenna 3-2 can be calculated as follows:

$$\begin{bmatrix} x_2^* & -x_2^* \end{bmatrix} \begin{bmatrix} y(k) \\ y(k+1) \end{bmatrix} = \begin{bmatrix} x_2^* & -x_2^* \end{bmatrix} \begin{bmatrix} x_1 & x_2 \\ x_1 & -x_2 \end{bmatrix} = \begin{bmatrix} x_1 x_2^* - x_1 x_2^* & 2|x_2|^2 \end{bmatrix} \begin{bmatrix} h_1 \\ h_2 \end{bmatrix}$$
$$= 2|x_2|^2 \, h_2 \qquad (11)$$

The method can be extended to multiple transmit antennas 3-i, for instance to $N_t$ transmit antennas 3-i as follows:

$$\begin{bmatrix} y(k+1) \\ y(k+2) \\ y(k+3) \\ \vdots \\ y(k+N) \end{bmatrix} = \begin{bmatrix} \omega^0 & \omega^0 & \cdots & \omega^0 & \omega^0 \\ \omega^0 & \omega^1 & \cdots & \omega^{N-2} & \omega^{N-1} \\ \vdots & & \ddots & & \vdots \\ \omega^0 & \omega^{N-2} & \cdots & \ddots & \omega^{(N-1)(N-2)} \\ \omega^0 & \omega^{N-1} & \cdots & \omega^{(N-2)(N-1)} & \omega^{(N-1)(N-1)} \end{bmatrix} \begin{bmatrix} x_1 & 0 & 0 & 0 & 0 \\ 0 & x_2 & 0 & 0 & 0 \\ 0 & 0 & x_3 & 0 & 0 \\ \vdots & & & \ddots & \\ 0 & 0 & 0 & 0 & x_N \end{bmatrix} \begin{bmatrix} h_1 \\ h_2 \\ h_3 \\ \vdots \\ h_N \end{bmatrix} \qquad (12)$$

wherein $N = N_t$ is the number of the transmit antennas 3-i and wherein $(\omega^0, \omega^1, ..., \omega^{N-1})$ are the N-roots of unity. Accordingly, from transmit antenna 3-1 $(x_1,x_1,x_1,...,x_1)_{N \times 1}$ data is transmitted on the N consecutive time indices, and from the second transmit antenna 3-2 $(x_2, \omega^1 x_2, \omega^2 x_2, ..., x_2)_{N \times 1}$, data is transmitted on the N consecutive time indices and similarly on the $N^{th}$ transmit antenna $(x_N, \omega^{N-1} x_N, \omega^{2(N-1)} x_N, ..., \omega^{(N-1)(N-1)} x_N)$, data are transmitted on N consecutive time indices.

The above equation (12) can be expressed as:

$$\underline{y} = \Omega \, diag(\underline{x}) \underline{h} \qquad (13)$$

wherein the matrix $\Omega$ can be implemented easily through a DFT/FFT matrix which greatly simplifies the operations and the required computation resources of the radar system.

At the receiver of the radar apparatus 1, the following calculations can be performed as follows:

$$diag\left(\underline{x}^*\right)\Omega^*\underline{y} = diag(\underline{x}^*)\ \Omega^*\Omega\ diag\left(\underline{x}\right)\underline{h} = diag\left(\underline{|x|^2}\right)\underline{h} \tag{14}$$

In this way, the target/channel response is separated from all the $N_t$ transmit antennas 3-i. The operation for a specific antenna target/channel response can be expressed for the first transmit antenna 3-1 as follows:

$$[x_1^* \quad x_1^* \quad x_1^* \quad \ldots \quad x_1^*] \begin{bmatrix} \omega^0 & \omega^0 & \ldots & \omega^0 & \omega^0 \\ \omega^0 & \omega^1 & \ldots & \omega^{N-2} & \omega^{N-1} \\ \vdots & & \ddots & & \vdots \\ \omega^0 & \omega^{N-2} & \ldots & \ddots & \omega^{(N-1)(N-2)} \\ \omega^0 & \omega^{N-1} & \ldots & \omega^{(N-2)(N-1)} & \omega^{(N-1)(N-1)} \end{bmatrix} \begin{bmatrix} x_1 & 0 & 0 & 0 & 0 \\ 0 & x_2 & 0 & 0 & 0 \\ 0 & 0 & x_3 & 0 & 0 \\ \vdots & & & \ddots & \\ 0 & 0 & 0 & 0 & x_N \end{bmatrix} \begin{bmatrix} h_1 \\ h_2 \\ h_3 \\ \vdots \\ h_N \end{bmatrix}$$

$$= [Nx_1^* \quad \omega^0 + \omega^1 + \cdots \omega^{N-1} \quad \ldots \quad \ldots \quad \omega^0 + \omega^{N-1} + \cdots \omega^{(N-1)(N-1)}] \begin{bmatrix} x_1 & 0 & 0 & 0 & 0 \\ 0 & x_2 & 0 & 0 & 0 \\ 0 & 0 & x_3 & 0 & 0 \\ \vdots & & & \ddots & \\ 0 & 0 & 0 & 0 & x_N \end{bmatrix} \begin{bmatrix} h_1 \\ h_2 \\ h_3 \\ \vdots \\ h_N \end{bmatrix}$$

$$\tag{15}$$

Using the property of N-roots of unity that $\omega^0 + \omega^1 + \cdots \omega^{N-1} = 0$, gives:

$$= [Nx_1^* \quad 0 \quad 0 \quad \ldots \quad 0] \begin{bmatrix} x_1 & 0 & 0 & 0 & 0 \\ 0 & x_2 & 0 & 0 & 0 \\ 0 & 0 & x_3 & 0 & 0 \\ \vdots & & & \ddots & \\ 0 & 0 & 0 & 0 & x_N \end{bmatrix} \begin{bmatrix} h_1 \\ h_2 \\ h_3 \\ \vdots \\ h_N \end{bmatrix} = N|x_1|^2 h_1 \tag{16}$$

The operation of the other transmit antennas 3-i is performed in a similar way.

The method for providing orthogonality among the transmit antennas 3-i according to the fifth aspect of the present invention requires few computational resources and scales for multiple transmit antennas 3-i easily.

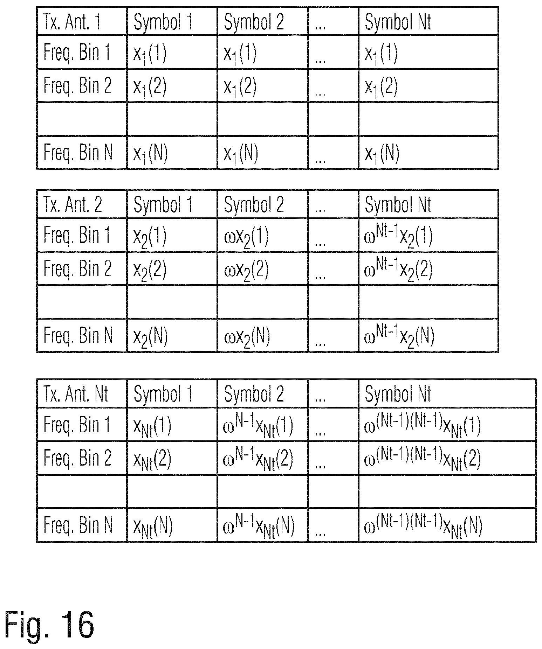

Fig. 16 illustrates the transmission of data from all $N_t$ transmit antennas 3-i across time and frequency for a target.

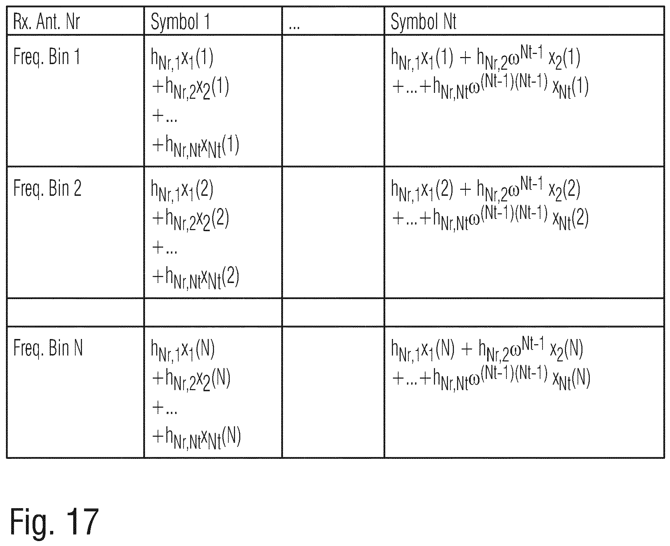

Further, Fig. 17 illustrates the received data from the receive antenna 4-i in response to the applied transmit time-coded data of all $N_t$ transmit antennas 3-i. The method for providing orthogonality according to the fifth aspect of the present invention has the advantage that it provides a time pulse diversity in the MIMO radar system. The method for providing orthogonality according to the fifth aspect of the present invention can also be applied to radar networks where all radar units are synchronized but all radar units require orthogonality or linear separability of the respective transmit signals for target imaging or target classification.

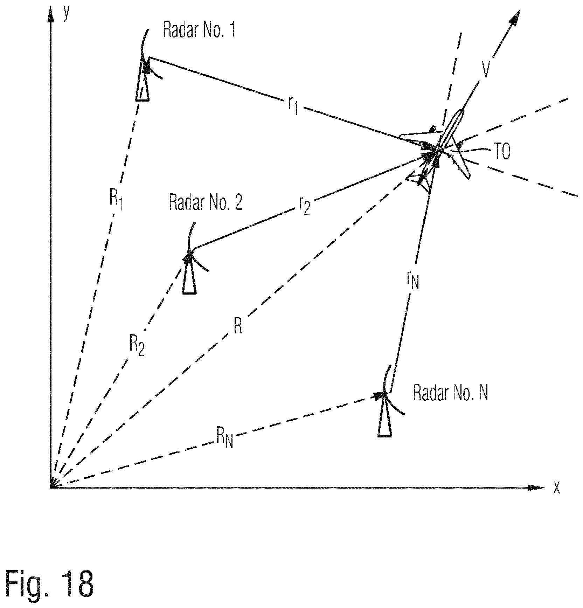

Fig. 18 illustrates schematically a possible implementation of a radar network comprising different radar units each comprising one or several transmit antennas 3-i and receive antennas 4-i. The target object TO can be for instance a moving aeroplane as illustrated in Fig. 18. The distance between the moving target object TO and the different radar units is illustrated as a radius $r_i$. The radar units have a common reference point of a coordinate system origin at a distance of $R_i$, respectively, as shown in Fig. 18. In a possible implementation, the different radar units comprise a radar apparatus 1 such as illustrated in Figs. 1, 10. The different radar units of the distributed radar network shown in Fig. 18 are connected in a preferred embodiment to a central control unit CU adapted to synchronize the distributed radar apparatuses 1 to each other. The MIMO radar system according to the present invention allows for detection of a moving target object TO more efficiently. Further, the resource allocation to detect the target object TO is optimized. The MIMO radar system according to the illustrated embodiments increases the signal to noise ratio SNR of the received signals making the detection of the target object TO more reliable. The method and radar apparatus 1 according to the different aspects of the present invention allow for detection of targets with a small radar cross-section RCS and/or a target object TO at a wide detection range. The method and radar apparatus 1 of the radar system can be used for radar signals in a wide frequency range, for instance from 4 to 100 GHz. The MIMO radar system according to the present invention can be used for different applications, for instance surveillance systems surveilling objects or targets in an open area or in automotive systems of cars. Further, the radar system can be used for fast-moving targets such as aeroplanes. The radar system can be used for tracking, surveillance and defence operations. The MIMO radar system can also be used for automotive radar apparatuses where power transmission is limited. The MIMO radar system can secure different kinds of information about the object or target including its position, its velocity and its aspect angle (azimuth, elevation) relative to the radar apparatus 1. The method according to the third aspect of the present invention and according to the fifth aspect of the present invention provide orthogonality among the transmit antennas 3-i of the radar system. The method according to the first aspect of the present invention provides for adaptive transmission of frequency subcarriers fc to improve efficiency of the radar system.

Reference Signs

| 1 | Radar apparatus |
|---|---|
| 2 | MIMO radar antenna array |
| 3 | Transmit antenna array |
| 4 | Receive antenna array |
| 5 | Processing unit |
| 6 | Transmitting unit |
| 7 | Receiving unit |
| 8 | Down conversion unit |
| 9 | Up conversion unit |
| 10 | FPGA |
| 11A | Transmit signal generator |
| 11B | Receive signal processor |
| 12 | Subcarrier mapping unit |
| 13 | IFFT |
| 14 | Cyclic prefix unit |
| 15 | Vector modulator |
| 16 | Numerical controlled oscillator |
| 17 | Digital/analogue converter |
| 18 | Band pass filter |
| 19 | SPDT switch |
| 20 | Phase locked loop frequency synthesizer |
| 21 | Band pass filter |
| 22 | Digital/analogue converter |
| 23 | Vector demodulator |
| 24 | Inverse cyclic prefix unit |
| 25 | FFT-unit |
| 26 | Subcarrier demapping unit |

**Claims**

1. A method for adaptive transmission of frequency subcarriers through transmit antennas (3-i) of a multiple input multiple output, MIMO, radar system, the method comprising the steps of:

   (a) transmitting (S1A) in a probing phase all frequency subcarriers from all transmit antennas (3-i) in a time division multiplexing mode; and
   (b) allocating (S1B) dynamically in an adaption phase frequency subcarriers to transmit antennas (3-i) by optimizing a received signal strength, RSSI.

2. The method according to claim 1 wherein the frequency subcarriers are allocated to transmit antennas (3-i) dynamically in the adaption phase by locally optimizing the received signal strength, RSSI, over the frequency subcarriers for each transmit antenna.

3. The method according to claim 1 wherein the frequency subcarriers are allocated to transmit antennas (3-i) dynamically in the adaption phase by globally optimizing the total received signal strength, RSSI, over the frequency subcarriers for all transmit antennas (3-i).

4. The method according to any of the claims 1 to 3 wherein the received signal strength, RSSI, is computed over each frequency subcarrier for all transmit antennas (3-i).

5. The method according to any of the claims 1 to 4 wherein the probing phase and the adaption phase are alternating and repeated periodically in a periodic sequence.

6. The method according to any of the claims 1 to 5 wherein the probing phase comprises a frame to transmit all frequency subcarriers in one or more symbols from all transmit antennas (3-i) of said MIMO radar system in a time division multiplexing mode by switching between the transmit antennas (3-i) in a round robin scheme.

7. The method according to any of the claims 1 to 6 wherein the adaption phase comprises at least one frame where the transmit antennas (3-i) transmit simultaneously the frequency subcarriers allocated to the transmit antennas (3-i).

8. The method according to any of the claims 1 to 7 wherein in the adaption phase frequency subcarriers are allocated to transmit antennas (3-i) of said MIMO radar system to provide a subcarrier-antenna mapping.

9. The method according to any of the claims 1 to 8 wherein at least a minimum number of frequency subcarriers is allocated to each transmit antenna (3-i) of said MIMO radar system.

10. The method according to any of the claims 1 to 9 wherein in the adaption phase individual frequency subcarriers are allocated to transmit antennas (3-i) of said MIMO radar system by optimizing a received signal strength, RSSI.

11. The method according to any of the claims 1 to 9 wherein in the adaption phase a frequency subcarrier block of contiguous frequency subcarriers is allocated to transmit antennas (3-i) of said MIMO radar system by optimizing a mean received signal strength, RSSI, over the contiguous frequency subcarriers of said frequency subcarrier block.

12. The method according to any of the claims 1 to 11 wherein if the received signal strength, RSSI, provided by a frequency subcarrier allocated to a transmit antenna (3-i) of said MIMO radar system drops significantly from the time where the respective frequency subcarrier has been allocated to said transmit antenna (3-i) the respective frequency subcarrier is dynamically reallocated.

13. A multiple input multiple output, MIMO, radar system comprising:

   a MIMO radar antenna array (2) having transmit antennas (3) adapted to transmit signals and receive antennas (4) adapted to receive signals,
   wherein in a probing phase all frequency subcarriers are transmitted from all transmit antennas (3) of said MIMO radar antenna array (2) in a time division multiplexing mode and wherein in an adaption phase frequency subcarriers are allocated dynamically to transmit antennas (3) of said MIMO radar antenna array (2) by optimizing a received signal strength, RSSI, of signals received by the receive antennas (4) of said MIMO radar antenna array (2).

14. The multiple input multiple output, MIMO, radar system according to claim 13 wherein the frequency subcarriers are allocated to transmit antennas (3) dynamically in the adaption phase by locally optimizing the received signal strength, RSSI, over the frequency subcarriers for each transmit antenna (3) or wherein the frequency subcarriers are allocated to transmit antennas (3) dynamically in the adaption phase by globally optimizing the total received signal strength, RSSI, over the frequency subcarriers for all transmit antennas (3).

15. The multiple input multiple output, MIMO, radar system according to claim 13 or 14 wherein the probing phase comprises a frame to transmit all frequency subcarriers in one or more symbols from all transmit antennas (3) of said MIMO radar antenna array (2) in a time division multiplexing mode by switching between the transmit antennas (3) in a round robin scheme and wherein the adaption phase further comprises at least one frame where the transmit antennas (3) transmit simultaneously with the frequency subcarriers allocated to the transmit antennas (3).

Fig. 1

Fig. 2

1 Frame = $N_{sym}$

| Tx. Antenna 1 | Tx. Antenna 2 | · · · | Tx. Antenna $N_{Tx}$ |
|---|---|---|---|

$N$ subcarriers

$N_{sym}/N_{Tx}$ symbols

# Fig. 3

Tx. antennas

TSM

subcarriers

| RSSI (1,1) | RSSI (1,2) | | RSSI (2,$N_{Tx}$) |
|---|---|---|---|
| RSSI (2,1) | RSSI (2,2) | | RSSI (2,$N_{Tx}$) |
| | | | |
| RSSI (N,1) | RSSI (N,2) | | RSSI (N,$N_{Tx}$) |

# Fig. 4

Tx. antennas →

| subcarriers ↓ | RSSI (1,1) | RSSI (1,2) |      | RSSI $(2,N_{TX})$ |
|---|---|---|---|---|
| | RSSI (2,1) | RSSI (2,2) |      | RSSI $(2,N_{TX})$ |
| | RSSI (3,1) | RSSI (3,2) | ... | RSSI $(3,N_{TX})$ |
| | ... | ... | | ... |
| | RSSI (N,1) | RSSI (N,2) |      | RSSI $(N,N_{TX})$ |

# Fig. 5

| | |
|---|---|
| Subcarrier 1 | Tx. Antenna 2 |
| Subcarrier 2 | Tx. Antenna $N_{TX}$ |
| Subcarrier 3 | Tx. Antenna 3 |
| | |
| Subcarrier N | Tx. Antenna 1 |

1 Frame = $N_{\mu m}$

| Tx. Antenna 1 to Tx. Antenna $N_{TX}$ |
|---|

# Fig. 6

1 Frame   Multiple Frames

| Probing Phase | | ... | | Probing Phase | | ... | | Probing Phase | | ... | |
|---|---|---|---|---|---|---|---|---|---|---|---|

Adaptation Phase          Adaptation Phase          Adaptation Phase

# Fig. 7

1 Frame   1 Frame   1 Frame   1 Frame   1 Frame   1 Frame   1 Frame   1 Frame

| Probing Phase | Adaptation Phase | Probing Phase | Adaptation Phase | Probing Phase | Adaptation Phase | Probing Phase | Adaptation Phase |
|---|---|---|---|---|---|---|---|

# Fig. 8

Fig. 9

EP 3 339 893 A1

Fig. 10

Fig. 11

| Tx. Ant. 1 | Symbol 1 | Symbol 2 |
|---|---|---|
| Freq. Bin 1 | $X_1(1)$ | $-X_2^*(1)$ |
| Freq. Bin 2 | $X_1(2)$ | $-X_2^*(2)$ |
| Freq. Bin 3 | $X_1(3)$ | $-X_2^*(3)$ |
| | ... | ... |
| | ... | ... |
| Freq. Bin N | $X_1(N)$ | $-X_2^*(N)$ |

| Rx. Ant. 1 | Symbol 1 | Symbol 2 |
|---|---|---|
| Freq. Bin 1 | $X_1(1)H^1_1(1)+X_2(1)H^1_2(1)$ | $-X_2^*(1)H^1_1(1)+X^*_1(1)H^1_2(1)$ |
| Freq. Bin 2 | $X_1(2)H^1_1(2)+X_2(2)H^1_2(2)$ | $-X_2^*(2)H^1_1(2)+X^*_1(2)H^1_2(2)$ |
| Freq. Bin 3 | $X_1(3)H^1_1(3)+X_2(3)H^1_2(3)$ | $-X_2^*(3)H^1_1(3)+X^*_1(3)H^1_2(3)$ |
| | ... | ... |
| | ... | ... |
| Freq. Bin N | $X_1(N)H^1_1(N)+X_2(N)H^1_2(N)$ | $-X_2^*(N)H^1_1(N)+X^*_1(N)H^1_2(N)$ |

Tx 1 — 3-1

Tx 2 — 3-2

4-1 — Rx 1

4-2 — Rx 16

| Tx. Ant. 2 | Symbol 1 | Symbol 2 |
|---|---|---|
| Freq. Bin 1 | $X_2(1)$ | $X_1^*(1)$ |
| Freq. Bin 2 | $X_2(2)$ | $X_1^*(2)$ |
| Freq. Bin 3 | $X_2(3)$ | $X_1^*(3)$ |
| | ... | ... |
| | ... | ... |
| Freq. Bin N | $X_2(N)$ | $X_1^*(N)$ |

| Rx. Ant. 16 | Symbol 1 | Symbol 2 |
|---|---|---|
| Freq. Bin 1 | $X_1(1)H^{16}_1(1)+X_2(1)H^{16}_2(1)$ | $-X_2^*(1)H^{16}_1(1)+X^*_1(1)H^{16}_2(1)$ |
| Freq. Bin 2 | $X_1(2)H^{16}_1(2)+X_2(2)H^{16}_2(2)$ | $-X_2^*(2)H^{16}_1(2)+X^*_1(2)H^{16}_2(2)$ |
| Freq. Bin 3 | $X_1(3)H^{16}_1(3)+X_2(3)H^{16}_2(3)$ | $-X_2^*(3)H^{16}_1(3)+X^*_1(3)H^{16}_2(3)$ |
| | ... | ... |
| | ... | ... |
| Freq. Bin N | $X_1(N)H^{16}_1(N)+X_2(N)H^{16}_2(N)$ | $-X_2^*(N)H^{16}_1(N)+X^*_1(N)H^{16}_2(N)$ |

Fig. 12

Matched Filtering Tx Antenna 1
Target Data
Sym 1*($x_1$*)+ Symb 2*(-$x_2$)

| Rx. Ant. 1 | Transformed Signal from Transmit Antenna 1 |
|---|---|
| Freq. Bin 1 | $\|X_1(1)\|^2 H^1_1(1) + X^*_1(1)X_2(1)H^1_2(1) + \|X_2(1)\|^2 H^1_1(1) - X_2(1)X^*_1(1)H^1_2(1)$ |
| Freq. Bin 2 | $\|X_1(2)\|^2 H^1_1(2) + X^*_1(2)X_2(2)H^1_2(2) + \|X_2(2)\|^2 H^1_1(2) - X_2(2)X^*_1(2)H^1_2(2)$ |
| Freq. Bin 3 | $\|X_1(3)\|^2 H^1_1(3) + X^*_1(3)X_2(3)H^1_2(3) + \|X_2(3)\|^2 H^1_1(3) - X_2(3)X^*_1(3)H^1_2(3)$ |
|  | ... |
|  | ... |
| Freq. Bin N | $\|X_1(N)\|^2 H^1_1(N) + X^*_1(N)X_2(N)H^1_2(N) + \|X_2(N)\|^2 H^1_1(N) - X_2(N)X^*_1(N)H^1_2(N)$ |

$= (\|x_1\|^2 + \|x_2\|^2) \begin{bmatrix} H^1_1(1) \\ H^1_1(2) \\ ... \\ H^1_1(N) \end{bmatrix}$

Rx 1

Matched Filtering Tx Antenna 2
Target Data
Sym 1*($x_2$*)+ Symb 2*($x_1$)

| Rx. Ant. 1 | Transformed Signal from Transmit Antenna 1 |
|---|---|
| Freq. Bin 1 | $\|X_2(1)\|^2 H^1_2(1) + X_1(1)X^*_2(1)H^1_1(1) + \|X_1(1)\|^2 H^1_2(1) - X_1(1)X^*_2(1)H^1_1(1)$ |
| Freq. Bin 2 | $\|X_2(2)\|^2 H^1_2(2) + X_1(2)X^*_2(2)H^1_1(2) + \|X_1(2)\|^2 H^1_2(2) - X_1(2)X^*_2(2)H^1_1(2)$ |
| Freq. Bin 3 | $\|X_2(3)\|^2 H^1_2(3) + X_1(3)X^*_2(3)H^1_1(3) + \|X_1(3)\|^2 H^1_2(3) - X_1(3)X^*_2(3)H^1_1(3)$ |
|  | ... |
|  | ... |
| Freq. Bin N | $\|X_2(N)\|^2 H^1_2(N) + X_1(N)X^*_2(N)H^1_1(N) + \|X_1(N)\|^2 H^1_2(N) - X_1(N)X^*_2(N)H^1_1(N)$ |

$= (\|x_1\|^2 + \|x_2\|^2) \begin{bmatrix} H^2_1(1) \\ H^2_1(2) \\ ... \\ H^2_1(N) \end{bmatrix}$

Fig. 13

Transmit Antenna 1 (3-1)

| SYM 1 | SYM 2 | SYM 3 | SYM 4 | SYM 5 | SYM 6 | ... | SYM K-1 | SYM K |
|---|---|---|---|---|---|---|---|---|
| $p^1 x_1(1)$ | $-p^1 x_2^*(1)$ | $p^2 x_1(1)$ | $-p^2 x_2^*(1)$ | $p^3 x_1(1)$ | $-p^3 x_2^*(1)$ | | $p^{K/2} x_1(1)$ | $-p^{K/2} x_2^*(1)$ |
| $p^1 x_1(2)$ | $-p^1 x_2^*(2)$ | $p^2 x_1(2)$ | $-p^2 x_2^*(2)$ | $p^3 x_1(2)$ | $-p^3 x_2^*(2)$ | | $p^{K/2} x_1(2)$ | $-p^{K/2} x_2^*(2)$ |
| $p^1 x_1(3)$ | $-p^1 x_2^*(3)$ | $p^2 x_1(3)$ | $-p^2 x_2^*(3)$ | $p^3 x_1(3)$ | $-p^3 x_2^*(3)$ | | $p^{K/2} x_1(3)$ | $-p^{K/2} x_2^*(3)$ |
| | | | | | | | | |
| | | | | | | | | |
| $p^1 x_1(N)$ | $-p^1 x_2^*(N)$ | $p^2 x_1(N)$ | $-p^2 x_2^*(N)$ | $p^3 x_1(N)$ | $-p^3 x_2^*(N)$ | | $p^{K/2} x_1(N)$ | $-p^{K/2} x_2^*(N)$ |

Transmit Antenna 2 (3-2)

| SYM 1 | SYM 2 | SYM 3 | SYM 4 | SYM 5 | SYM 6 | ... | SYM K-1 | SYM K |
|---|---|---|---|---|---|---|---|---|
| $p^1 x_2(1)$ | $p^1 x_1^*(1)$ | $p^2 x_2(1)$ | $p^2 x_1^*(1)$ | $p^3 x_2(1)$ | $p^3 x_1^*(1)$ | | $p^{K/2} x_2(1)$ | $p^{K/2} x_1^*(1)$ |
| $p^1 x_2(2)$ | $p^1 x_1^*(2)$ | $p^2 x_2(2)$ | $p^2 x_1^*(2)$ | $p^3 x_2(2)$ | $p^3 x_1^*(2)$ | | $p^{K/2} x_2(2)$ | $p^{K/2} x_1^*(2)$ |
| $p^1 x_2(3)$ | $p^1 x_1^*(3)$ | $p^2 x_2(3)$ | $p^2 x_1^*(3)$ | $p^3 x_2(3)$ | $p^3 x_1^*(3)$ | | $p^{K/2} x_2(3)$ | $p^{K/2} x_1^*(3)$ |
| | | | | | | | | |
| | | | | | | | | |
| $p^1 x_2(N)$ | $p^1 x_1^*(N)$ | $p^2 x_2(N)$ | $p^2 x_1^*(N)$ | $p^3 x_2(N)$ | $p^3 x_1^*(N)$ | | $p^{K/2} x_2(N)$ | $p^{K/2} x_1^*(N)$ |

Fig. 14

EP 3 339 893 A1

Fig. 15

| Tx. Ant. 1 | Symbol 1 | Symbol 2 | ... | Symbol Nt |
|---|---|---|---|---|
| Freq. Bin 1 | $x_1(1)$ | $x_1(1)$ | ... | $x_1(1)$ |
| Freq. Bin 2 | $x_1(2)$ | $x_1(2)$ | ... | $x_1(2)$ |
|  |  |  |  |  |
| Freq. Bin N | $x_1(N)$ | $x_1(N)$ | ... | $x_1(N)$ |

| Tx. Ant. 2 | Symbol 1 | Symbol 2 | ... | Symbol Nt |
|---|---|---|---|---|
| Freq. Bin 1 | $x_2(1)$ | $\omega x_2(1)$ | ... | $\omega^{Nt-1}x_2(1)$ |
| Freq. Bin 2 | $x_2(2)$ | $\omega x_2(2)$ | ... | $\omega^{Nt-1}x_2(2)$ |
|  |  |  |  |  |
| Freq. Bin N | $x_2(N)$ | $\omega x_2(N)$ | ... | $\omega^{Nt-1}x_2(N)$ |

| Tx. Ant. Nt | Symbol 1 | Symbol 2 | ... | Symbol Nt |
|---|---|---|---|---|
| Freq. Bin 1 | $x_{Nt}(1)$ | $\omega^{N-1}x_{Nt}(1)$ | ... | $\omega^{(Nt-1)(Nt-1)}x_{Nt}(1)$ |
| Freq. Bin 2 | $x_{Nt}(2)$ | $\omega^{N-1}x_{Nt}(2)$ | ... | $\omega^{(Nt-1)(Nt-1)}x_{Nt}(2)$ |
|  |  |  |  |  |
| Freq. Bin N | $x_{Nt}(N)$ | $\omega^{N-1}x_{Nt}(N)$ | ... | $\omega^{(Nt-1)(Nt-1)}x_{Nt}(N)$ |

# Fig. 16

| Rx. Ant. Nr | Symbol 1 | ... | Symbol Nt |
|---|---|---|---|
| Freq. Bin 1 | $h_{Nr,1}x_1(1)$ $+h_{Nr,2}x_2(1)$ $+...$ $+h_{Nr,Nt}x_{Nt}(1)$ | | $h_{Nr,1}x_1(1) + h_{Nr,2}\omega^{Nt-1}x_2(1)$ $+...+h_{Nr,Nt}\omega^{(Nt-1)(Nt-1)}x_{Nt}(1)$ |
| Freq. Bin 2 | $h_{Nr,1}x_1(2)$ $+h_{Nr,2}x_2(2)$ $+...$ $+h_{Nr,Nt}x_{Nt}(2)$ | | $h_{Nr,1}x_1(2) + h_{Nr,2}\omega^{Nt-1}x_2(2)$ $+...+h_{Nr,Nt}\omega^{(Nt-1)(Nt-1)}x_{Nt}(2)$ |
| | | | |
| Freq. Bin N | $h_{Nr,1}x_1(N)$ $+h_{Nr,2}x_2(N)$ $+...$ $+h_{Nr,Nt}x_{Nt}(N)$ | | $h_{Nr,1}x_1(N) + h_{Nr,2}\omega^{Nt-1}x_2(N)$ $+...+h_{Nr,Nt}\omega^{(Nt-1)(Nt-1)}x_{Nt}(N)$ |

Fig. 17

Fig. 18

**EUROPEAN SEARCH REPORT**

Europäisches Patentamt
European Patent Office
Office européen des brevets

Application Number

EP 17 18 1035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/342387 A1 (ZWICK THOMAS [DE] ET AL) 26 December 2013 (2013-12-26) * the whole document * ----- | 1-15 | INV. G01S13/34 G01S13/42 |
| A | KUSWIDIASTUTI DEVY ET AL: "MIMO radar waveform design using interleaved-OFDM technique", 2016 IEEE INTERNATIONAL CONFERENCE ON COMMUNICATION, NETWORKS AND SATELLITE (COMNETSAT), IEEE, 8 December 2016 (2016-12-08), pages 53-59, XP033086374, DOI: 10.1109/COMNETSAT.2016.7907416 [retrieved on 2017-04-21] * the whole document * ----- | 1-15 | |
| A | CN 104 166 132 B (UNIV SOUTHEAST) 17 August 2016 (2016-08-17) * abstract; figure 2 * ----- | 1-15 | |
| A | YANG YANG ET AL: "Radar Waveform Design using Minimum Mean-Square Error and Mutual Information", SENSOR ARRAY AND MULTICHANNEL PROCESSING, 2006. FOURTH IEEE WORKSHOP ON, IEEE, PISCATAWAY, NJ, USA, 12 July 2006 (2006-07-12), pages 234-238, XP031331488, ISBN: 978-1-4244-0308-0 * abstract * ----- -/-- | 1-15 | TECHNICAL FIELDS SEARCHED (IPC) G01S |

The present search report has been drawn up for all claims

| Place of search | Date of completion of the search | Examiner |
|---|---|---|
| Munich | 16 February 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 17 18 1035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAKOBYAN GOR ET AL: "A novel narrowband interference suppression method for OFDM radar", 2016 24TH EUROPEAN SIGNAL PROCESSING CONFERENCE (EUSIPCO), EURASIP, 29 August 2016 (2016-08-29), pages 2230-2234, XP033011333, DOI: 10.1109/EUSIPCO.2016.7760645 [retrieved on 2016-11-28] * page 2232, column 1, line 1 - line 6 * | 1-15 | |
| A | US 2016/334501 A1 (LING CURTIS [US]) 17 November 2016 (2016-11-17) * paragraph [0069] * | 1-15 | |

TECHNICAL FIELDS
SEARCHED      (IPC)

The present search report has been drawn up for all claims

| Place of search | Date of completion of the search | Examiner |
|---|---|---|
| Munich | 16 February 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 1035

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2018

| Patent document cited in search report | | Publication date | Patent family member(s) | | Publication date |
|---|---|---|---|---|---|
| US 2013342387 | A1 | 26-12-2013 | DE 102011009874 B3<br>EP 2482096 A1<br>US 2013342387 A1 | | 12-04-2012<br>01-08-2012<br>26-12-2013 |
| CN 104166132 | B | 17-08-2016 | NONE | | |
| US 2016334501 | A1 | 17-11-2016 | NONE | | |

EPO FORM P0459

For more details about this annex : see Official Journal of the European Patent Office, No. 12/82